# EUROPEAN PATENT SPECIFICATION

(11) **EP 3 340 797 B1**
(45) Date of publication and mention of the grant of the patent: **12.02.2020**
(21) Application number: 15900715.2
(22) Date of filing: 11.08.2015
(51) Int. Cl.: A01N 43/80, A01N 25/22

(54) **METHOD FOR PREPARING A STABLE ISOTHIAZOLONE FORMULATION**
VERFAHREN ZUR HERSTELLUNG EINER STABILEN ISOTHIAZOLONFORMULIERUNG
PROCÉDÉ DE PRÉPARATION D'UNE FORMULATION D'ISOTHIAZOLONE STABLE

(43) Date of publication of application: 04.07.2018
(73) Proprietor: Dow Global Technologies LLC, Midland, MI 48674 (US)
(72) Inventor: YAN, Yunfei, Shanghai 201203 (CN); FELDER, Patrick T., CH-8810 Horgen (CH)
(74) Representative: Houghton, Mark Phillip
(86) International application number: PCT/CN2015/086625
(87) International publication number: WO 2017/024517

(56) References cited:
- CN-A- 1 502 238
- CN-A- 1 502 238
- CN-A- 103 476 253
- US-A- 3 870 795
- US-A- 4 067 878
- US-A- 4 783 221
- US-A- 5 073 582
- US-A- 5 073 582
- US-A- 5 108 500
- US-A- 5 108 500
- US-A1- 2006 057 300

## Description

This invention relates to a method for producing a stable microbicidal composition containing 4,5-dichloro-2-n-octyl-4-isothiazolin-3-one (DCOIT).

A stabilized composition containing an isothiazolone is disclosed in U.S. Pat. No. 5,108,500. The composition contains a copper salt of dodecylbenzenesulfonic acid and an organic solvent. However, this reference does not disclose a formulation capable of color stability on storage at elevated temperatures.

The problem addressed by this invention is to provide a stable microbicidal composition containing DCOIT.

### STATEMENT OF THE INVENTION

The present invention is directed to a method for producing a stable microbicidal composition; said method comprising steps of: (a) combining a glycol solvent of formula R(OCH₂CHR¹)ₙOH, wherein R is C₁-C₆ alkyl and n has a number average value from 2 to 5 and R¹ is hydrogen or methyl; dodecylbenzenesulfonic acid in an amount from 0.3 to 1.8 wt% based on the entire microbicidal composition; and a copper(II) salt selected from the group consisting of copper (II) hydroxide, copper (II) carbonate and mixtures thereof to form an initial mixture; wherein a mole ratio of copper:dodecylbenzenesulfonic acid is from 1:0.25 to 1:1.95; (b) maintaining the initial mixture at 40 to 80°C until an amount of copper ion in solution is stable, wherein the amount of copper ion in solution is considered to be stable when the percent change in copper ion concentration in solution over a thirty-minute period is no more than 1.2%; and (c) adding 4,5-dichloro-2-n-octyl-4-isothiazolin-3-one to produce a final mixture, and removing excess insoluble copper(II) hydroxide or oxide salts from the final mixture.

### DETAILED DESCRIPTION OF THE INVENTION

"DCOIT" is 4,5-dichloro-2-n-octyl-4-isothiazolin-3-one. "Dodecylbenzenesulfonic acid" is 4-dodecylbenzenesulfonic acid, CAS# 121-65-3.

As used herein, the following terms have the designated definitions, unless the context clearly indicates otherwise. A "solid" composition as the term is used herein is one that is solid at 25°C. Unless otherwise specified, temperatures are in degrees centigrade (°C), and references to percentages are percentages by weight (wt%). Operations are performed at room temperature (20-25°C), unless otherwise specified. Percentages of components in the composition are on the basis of the entire composition. The amount of copper ion in solution is considered to be stable when the percent change in copper ion concentration in solution over a thirty-minute period is no more than 1.2%, preferably no more than 1.1%, preferably no more than 1%. The percent change in copper ion concentration is obtained by subtracting the lower copper ion concentration from the higher copper ion concentration, dividing by the lower concentration and multiplying by 100. Percentages in the microbicidal composition are based on the entire composition including the DCOIT.

Excess insoluble copper(II) hydroxide or oxide salts are removed from the final mixture. Preferably copper(II) salts are removed by filtration or centrifugation. In a preferred embodiment of the invention, copper(II) salts are removed from the initial mixture after heating and prior to addition of DCOIT. Preferably, the amount of copper(II) hydroxide or oxide added to form the initial mixture is from 0.08 to 0.5 wt%, preferably from 0.09 to 0.4 wt%, preferably from 0.1 to 0.3 wt%, preferably from 0.11 to 0.25 wt%.

Preferably, in the glycol solvent, R is C₂-C₆ alkyl, preferably C₃-C₄ alkyl, preferably n-butyl; preferably n is from 2.5 to 4, preferably from 3 to 4. Preferably, the glycol solvent comprises n-butyl ethers of dipropylene glycol or of triethylene glycol and tetraethylene glycol. In one preferred embodiment, R¹ is hydrogen.

Preferably, the initial mixture is maintained at a temperature from 50 to 80°C; preferably at least 55°C, preferably at least 60°C, preferably at least 65°C; preferably no more than 78°C, preferably no more than 77°C, preferably no more than 75°C. Preferably, the time the mixture is in this temperature range is from 1 to 12 hours; preferably at least 1.5 hours, preferably at least 2 hours, preferably at least 2.5 hours, preferably at least 3 hours; preferably no more than 11 hours, preferably no more than 10 hours, preferably no more than 9 hours, preferably no more than 8 hours. The time will vary depending on the reaction temperature.

Preferably, the molar ratio of the copper salt to dodecylbenzenesulfonic acid is from 1:0.3 to 1:1.95, preferably from 1:0.35 to 1:1.95, preferably from 1:0.35 to 1:1.93, preferably from 1:0.4 to 1:1.92, preferably from 1:0.45 to 1:1.92, preferably from 1:0.5 to 1:1.9. Preferably, the copper (II) salt is copper (II) hydroxide.

Preferably, the microbicidal composition comprises from 4 to 16 wt% DCOIT, preferably from 6 to 15 wt%, preferably from 6.5 to 14 wt%, preferably from 7 to 13 wt%. Preferably, the microbicidal composition comprises from 82 to 95 wt% of the glycol solvent, preferably from 84 to 93 wt%, preferably from 85 to 93 wt%, preferably from 86 to 92 wt%. Preferably, the microbicidal composition comprises from 0.3 to 1.6 wt% dodecylbenzenesulfonic acid (DBSA), preferably from 0.5 to 1.5 wt%, preferably from 0.6 to 1.3 wt%, preferably from 0.7 to 1.2 wt%. Preferably, the microbicidal composition comprises from 0.05 to 0.4 wt% of copper(II) ion, preferably from 0.06 to 0.3 wt%, preferably from 0.07 to 0.25 wt%, preferably from 0.09 to 0.2 wt%.

Preferably, the initial mixture comprises 98 to 99.6 wt% glycol solvent, preferably from 98.2 to 99.4 wt%, preferably from 98.5 to 99.2 wt%. Preferably, the initial mixture comprises from 0.4 to 2 wt% DBSA, preferably from 0.6 to 1.8 wt%, preferably from 0.8 to 1.5 wt%.

The microbicidal compositions of the present invention can be used to inhibit the growth of microorganisms or higher forms of aquatic life (such as protozoans, invertebrates, bryozoans, dinoflagellates, crustaceans, mollusks, etc) by introducing a microbicidally effective amount of the compositions onto, into, or at a locus subject to microbial attack. Suitable loci include, for example: industrial process water; electrocoat deposition systems,; cooling towers; air washers; gas scrubbers; mineral slurries; wastewater treatment; ornamental fountains; reverse osmosis filtration; ultrafiltration; ballast water; evaporative condensers; heat exchangers; pulp and paper processing fluids and additives; starch; plastics; emulsions; dispersions; paints; latices; coatings, such as varnishes; construction products, such as mastics, caulks, and sealants; construction adhesives, such as ceramic adhesives, carpet backing adhesives, and laminating adhesives; industrial or consumer adhesives; photographic chemicals; printing fluids; household products, such as bathroom and kitchen cleaners; cosmetics; toiletries; shampoos; soaps; detergents; industrial cleaners; floor polishes; laundry rinse water; metalworking fluids; conveyor lubricants; hydraulic fluids; leather and leather products; textiles; textile products; wood and wood products, such as plywood, chipboard, flakeboard, laminated beams, oriented strandboard, hardboard, and particleboard; petroleum processing fluids; fuel; oilfield fluids, such as injection water, fracture fluids, and drilling muds; agriculture adjuvant preservation; surfactant preservation; medical devices; diagnostic reagent preservation; food preservation, such as plastic or paper food wrap; food, beverage, and industrial process pasteurizers; toilet bowls; recreational water; pools; and spas.

### EXAMPLES

### Analysis

- Gardner color: The color of the sample was measured according to ASTM D 1544-04 by using UltraScan® VIS colorimeter made by Hunterlab company. Test samples were fed into the tubes and put in the light path and their color values were tested.
- DCOIT concentration analysis: DCOIT concentrations were determined by reverse phase HPLC.
   o Prepare standard DCOIT solution. Weigh 36 mg ± 5 mg (to the nearest 0.1 mg) of DCOIT standard (>99.9% purity) into a 100 ml vial. Pipette and add 50 ml of methanol and mix well to dissolve. Transfer approximately 1.5 ml into 2 ml disposable syringe to which a 0.2 µm filter has been affixed. Filter solution into a 1.5 ml autosampler vial and cap with a TEFLON faced septum.
   o Prepare test solution: weigh 360 mg ± 25 mg (to the nearest 0.1 mg) of prepared formulation into a 100 ml vial. Pipette 50 ml of methanol. Add, mix well, transfer approximately 1.5 ml into 2 ml disposable syringe to which a 0.2 µm filter has been affixed, and filter solution into a 1.5 ml auto sampler vial and cap with a TEFLON faced septum.
   o HPLC Analysis conditions:
      Column: SPHERECLONE C18, 5 um, 150 mm x 4.5 mm id, Phenomenex, Inc.
      Column temperature: 35 C
      Mobile phase - 60% acetonitrile/15% methanol/25% water
      Flow rate: 1 ml/minute
      UV detector wavelength: 282 nm
      Injection volume: 5 µl
- Copper ion analysis: soluble copper content of the samples (after filtration or centrifugation) was analyzed by potentiometric titration
   1. Make sure the correct titrator is initialized.
   2. Place a 150 ml beaker on the titrator balance.
   3. Add 40 mls of HPLC grade water, 10 mls of acetone, and 10 mls the 10% potassium iodide solution to the beaker. Tare the beaker on the balance.
   4. Filter the sample with 1 micrometer Teflon membrane and weigh 2.0 - 3.0 grams of sample into the 150 ml titration beaker using a disposable pipette.
   5. Place on titrator stir plate and allow to sit from 3 minutes.
   6. Titrate the sample with 0.1N Sodium Thiosulfate standard solution, and record the volume of 0,1N sodium thiosulfate (mls of Na Thiosulfate) at the titration endpoint.
   7. Calculation of the reacted copper hydroxide by the formula:% Copper hydroxide reacted = (mls of Na Thiosulfate)×0.1N×9.756/(sample weight)
   8. Calculation of the dissolvable copper level by the formula :% Copper = (mls of Na Thiosulfate)×0.1N×6.355/(sample weight)

### Comparative Example 1

A DCOIT formulation was prepared by the following procedure:
- Charge 88.74gram (88.74%) triethylene gylcol monobutyl ether (BUTOXYTRIGLYCOL) into the reactor
- Charge 1.07gram (1.07%) dodecylbenzenesulfonic acid (CALSOFT LAS-99) into the reactor
- Charge 0.15gram (0.15%) copper hydroxide into the reactor (Cu:acid molar ratio 1:2.17)
- Mix above blends at 60°C for 2 hours or until copper hydroxide dissolves;
- Charge 10.04gram (10.04%) DCOIT (KATHON 287T) into the reactor, and mix for another 30 mins.

Fresh sample has a clear yellow greenish appearance. Then above sample was stored at different temperatures (40°C and 55°C) and color and stability was measured over time.

**Product quality at different storage condition**

| Storage condition | Gardner Color | DCOIT amount (%) | Appearance |
|---|---|---|---|
| Fresh sample | 0.7 | 9.929% | Pale greenish |
| 40°C for 30days | 4.5 | not measured | Yellow with black precipitate |
| 55°C for 30days | 10.8 | 9.76% | Brown color with black precipitate |

### Comparative Example 2

A DCOIT formulation was made from copper (II) hydroxide, dodecylbenzenesulfonic acid (DBSA), DCOIT and solvent according to the procedure of US5108500, columns 5 D followed by the addition of DCOIT.

| Experiment conditions | DBSA concentration in reaction (wt%) | Cu(OH)₂:DBSA molar ratio | Excess Cu(OH)₂ (mole) | Reaction Temperature and Time | Solvent |
|---|---|---|---|---|---|
| Organic copper salt solution | 51% | 1 : 1.38 | 45% | 170°C for 4.5hours | Solvesso 100 |

After storage at 55°C for one month, the sample was dark brown with a black precipitate.

### Comparative Example 3

A DCOIT formulation was prepared according to the following procedure: Cu-(DBSA)₂ intermediate preparation: Charge 1.07wt% DBSA, 0.15wt% copper hydroxide and 88.74wt% BUTOXYTRIGLYCOL into the reactor, and maintain at 60∼65°C for 2 hours.Molar ratio of copper hydroxide to DBSA is 1/2.17. Since one mole copper hydroxide will react with 2 mole DBSA, DBSA is in excess.
Final formulation: Then charge 10.04% DCOIT into above intermediate at 50∼55°C to make final formulation, then filter.

| DBSA concentration in reaction (wt%) | Cu(OH)₂:DBSA molar ratio | Excess Cu(OH)₂ (mole) | Reaction Temperature and Time | Appearance after 55°C for 1 month |
|---|---|---|---|---|
| 1.07% | 1 : 2.17 | -- | 60°C for 2 hours | Dark brown and black precipitate |

### Example 1

The DCOIT formulation was prepared by the following procedure:
- Charge 88.85gram (88.85%) BUTOXYTRIGLYCOL into the reactor
- Charge 0.95gram (0.95%) CALSOFT LAS-99 into the reactor
- Charge 0.163gram (0.163%) copper hydroxide into the reactor (Cu:acid molar ratio, 1:1.8)
- Mix above blends at 60°C until the soluble copper ion concentration stops increasing (4 hours, copper level was 0.105-0.11%). There is still excess insoluble copper hydroxide powder presented in the reaction formulation.
- Charge 10.04gram (10.04%) KATHON 287T into the reactor, and mix for another 30mins to dissolve all of the DCOIT.
- Filter the sample through a 0.1 micron filter to remove excess copper hydroxide. The fresh sample had a clear pale greenish appearance. The sample was stored at different temperatures (room temperature, 40°C and 55°C) and the color and stability were measured over time.

**Product quality at different storage condition**

| Storage condition | Gardner Color | DCOIT amount (%) | Appearance |
|---|---|---|---|
| Fresh sample | 1.0 | 9.981% | Clear pale greenish liquid |
| 40°C for 30days | 2.2 | not analyzed | Clear pale greenish liquid |
| 55°C for 30days | 3.8 | 9.825% | Light yellowish liquid |

### Example 2:

The copper stabilizer formulation was prepared by the following procedure:
Charge 88.85gram (88.85%) BUTOXYTRIGLYCOL into the reactor
Charge 0.95gram (0.95%) CALSOFT LAS-99 into the reactor
Charge 0.163gram (0.163%) copper hydroxide into the reactor

Mix above blends at 60°C, take samples and centrifuge the samples to remove unreacted copper hydroxide powder and analyze the dissolved copper amount at 0.5, 1, 1.5, 2, 2.5, and 3 hours

| | | | | | | |
|---|---|---|---|---|---|---|
| Time (hour) | 0.5 | 1.0 | 1.5 | 2.0 | 2.5 | 3.0 |
| Reacted Cu hydroxide | 0.149% | 0.147% | 0.16% | 0.159% | 0.161% | 0.161% |
| Cu(II) in solution | 0.0971% | 0.0958% | 0.104% | 0.104% | 0.105% | 0.105% |
| pH¹ | 5.02 | 5.34 | 5.27 | 5.34 | 5.41 | 5.52 |

| | | | | | | |
|---|---|---|---|---|---|---|
| 1. pH was measured on a solution of 1 part sample in 9 parts water. | | | | | | |

A reaction time of 1.5 hrs at 60C was sufficient to reach a stable dissolved copper concentration. This formulation remained a pale green color with no precipitate after storage at 55°C for one month.

### Example 3 (some samples comparative)

The results of further experiments performed according to the above procedure in Example 1 with the indicated conditions are summarized in the table below. All samples were filtered prior to being placed in an oven at 55°C. Those examples which are comparative are indicated by a "C" in the box listing the parameter which is out of scope. Results are considered acceptable when the solution is clear or very slightly turbid, with no precipitate, and the color is no darker than light yellow to light green. "DPnB" is dipropylene glycol monobutyl ether. "SOLVESSO 100" is a hydrocarbon solvent mixture primarily comprising C₉-C₁₀ di- and tri-alkylbenzenes with CAS# 64742-95-6.

| DBSA concentration in reaction (wt%) | Cu(OH)₂: DBSA molar ratio | Excess Cu(OH)₂ (mole) | Reaction temperature and time | Solvent | Appearance after 55°C for 1 month |
|---|---|---|---|---|---|
| 0.95% | 1 : 1.90 | 5% | 75°C for 4hours | BUTOXYTRIGLYCOL | Clear, light yellow greenish |
| 0.95% | 1: 1.8 | 11% | 65°C for 4hours | BUTOXYTRIGLYCOL | Clear, light yellow greenish |
| 0.95% | 1: 1.38 | 45% | 65°C for 4hours | BUTOXYTRIGLYCOL | Clear, light yellow greenish |
| 0.95% | 1: 1.0 | 100% | 75°C for 4hours | BUTOXYTRIGLYCOL | Clear, light yellow greenish |
| 0.95% | 1: 0.5 | 300% | 75°C for 4hours | BUTOXYTRIGLYCOL | Clear, light yellow greenish |
| 0.95% | 1: 0.2 (C) | 900% | 75°C for 4hours | BUTOXYTRIGLYCOL | yellow greenish, black precipitate |
| 0.95% | 1: 1.90 | 5% | 65°C for 4hours | BUTOXYTRIGLYCOL | Clear, light yellow greenish |
| 0.95% | 1: 1.8 | 11% | 75°C for 8hours | BUTOXYTRIGLYCOL | Clear, light yellow greenish |
| 0.95% | 1: 1.0 | 100% | 75°C for 8hours | BUTOXYTRIGLYCOL | Clear, light yellow greenish |
| 0.95% | 1: 1.90 | 5% | 85°C for 4hours (C) | BUTOXYTRIGLYCOL | yellow greenish, white precipitate |
| 1.07% | 1: 2.17 (C) | No excess Cu(OH)₂ | 75°C for 4hours | DPnB | Pale greenish, white precipitate |
| 1.18% | 1: 2.4 (C) | No excess Cu(OH)₂ | 75°C for 4hours | DPnB | Pale greenish, white precipitate |
| 0.95% | 1: 1.8 | 11% | 75°C for 4hours | DPnB | Clear, pale greenish |
| 0.95% | 1:1.0 | 100% | 75°C for 4hours | DPnB | very slightly turbid, light yellow green |
| 0.95% | 1:0.5 | 300% | 75°C for 4hours | DPnB | clear, light yellow green |
| 0.95% | 1: 1.8 | 11% | 75°C for 4hours | SOLVESSO 100 (C) | Turbid and grey precipitate |
| | | | | | |
| | | | | | |
| 2.85% (C) | 1:1.8 | 11% | 75°C for 4hours | BUTOXYTRIGLYCOL | Deep yellow, and black precipitate |
| 1.9% (C) | 1: 1.8 | 11% | 75°C for 4hours | BUTOXYTRIGLYCOL | Greenish and white precipitate |

## Claims

1. A method for producing a stable microbicidal composition; said method comprising steps of: (a) combining a glycol solvent of formula R(OCH₂CHR¹)ₙOH, wherein R is C₁-C₆ alkyl and n has a number average value from 2 to 5 and R¹ is hydrogen or methyl; dodecylbenzenesulfonic acid in an amount from 0.3 to 1.8 wt% based on the entire microbicidal composition; and a copper(II) salt selected from the group consisting of copper (II) hydroxide, copper (II) carbonate and mixtures thereof to form an initial mixture; wherein a mole ratio of copper: dodecylbenzenesulfonic acid is from 1:0.25 to 1:1.95; (b) maintaining the initial mixture at 50 to 80°C until an amount of copper ion in solution is stable, wherein the amount of copper ion in solution is considered to be stable when the percent change in copper ion concentration in solution over a thirty-minute period is no more than 1.2%; and (c) adding 4,5-dichloro-2-n-octyl-4-isothiazolin-3-one to produce a final mixture,
and removing excess insoluble copper(II) hydroxide or oxide salts from the final mixture.

2. The method of claim 1 in which the glycol solvent is added in an amount from 82 to 95 wt%, the copper(II) salt is added in an amount from 0.08 to 0.5 wt% and 4,5-dichloro-2-n-octyl-4-isothiazolin-3-one is added in an amount from 4 to 16 wt%, all percentages based on the entire microbicidal composition.

3. The method of claim 2 in which insoluble copper(II) salts are removed by filtration or centrifugation from the initial mixture or the final mixture.

4. The method of claim 3 in which the mole ratio of copper:dodecylbenzenesulfonic acid is from 1:0.3 to 1:1.95.

5. The method of claim 3 in which R is C₃-C₄ alkyl.

6. The method of claim 5 in which n is from 2.5 to 4.

7. The method of claim 6 in which the initial mixture is maintained at 55 to 80°C for 1 to 12 hours.

8. The method of claim 7 in which the glycol solvent is added in an amount from 84 to 93 wt%, the copper(II) salt is added in an amount from 0.1 to 0.5 wt%, 4,5-dichloro-2-n-octyl-4-isothiazolin-3-one is added in an amount from 6 to 15 wt% and dodecylbenzenesulfonic acid is added in an amount from 0.3 to 1.6 wt%.

9. The method of claim 8 in which the mole ratio of copper:dodecylbenzenesulfonic acid is from 1:0.35 to 1:1.95.

10. The method of claim 9 in which the initial mixture is maintained at 60 to 80°C for 1.5 to 10 hours.

## Patentansprüche

1. Verfahren zur Herstellung einer stabilen mikrobiziden Zusammensetzung; wobei das Verfahren die Schritte umfasst des: (a) Kombinierens eines Glycollösungsmittels der Formel R(OCH₂CHR¹)ₙOH, wobei R C₁₋₆-Alkyl ist und n einen zahlendurchschnittlichen Wert von 2 bis 5 aufweist und R¹ Wasserstoff oder Methyl ist; von Dodecylbenzolsulfonsäure in einer Menge von 0,3 bis 1,8 Gew.-%, auf die gesamte mikrobizide Zusammensetzung bezogen; und einem Kupfer(II)salz ausgewählt aus der Gruppe bestehend aus einem Kupfer(II)hydroxid, Kupfer(II)carbonat und Mischungen davon, um eine anfängliche Mischung zu bilden; wobei ein Molverhältnis von Kupfer: Dodecylbenzolsulfonsäure 1:0,25 bis 1:1,95 beträgt; (b) Haltens der anfänglichen Mischung bei 50 bis 80 °C, bis eine Menge von Kupferionen in Lösung stabil ist, wobei die Menge von Kupferionen in Lösung als stabil betrachtet wird, wenn die Prozentänderung der Kupferionenkonzentration in Lösung über eine Zeitspanne von 30 Minuten nicht mehr als 1,2 % beträgt; und (c) Zusetzens von 4,5-Dichlor-2-n-octyl-4-isothiazolin-3-on, um eine endgültige Mischung herzustellen,
und Entfernens von überschüssigem unlöslichem Kupfer(II)hydroxid oder - oxidsalzen von der endgültigen Mischung.

2. Verfahren nach Anspruch 1, wobei das Glycollösungsmittel in einer Menge von 82 bis 95 Gew.-% zugegeben wird, das Kupfer(II)salz in einer Menge von 0,08 bis 0,5 Gew.-% zugegeben wird und 4,5-Dichlor-2-n-octyl-4-isothiazolin-3-on in einer Menge von 4 bis 16 Gew.-% zugegeben wird, wobei alle Prozentsätze auf die gesamte mikrobizide Zusammensetzung bezogen sind.

3. Verfahren nach Anspruch 2, wobei unlösliche Kupfer(II)salze durch Filtrieren oder Zentrifugieren von der anfänglichen Mischung oder der endgültigen Mischung entfernt werden.

4. Verfahren nach Anspruch 3, wobei das Molverhältnis von Kupfer: Dodecylbenzolsulfonsäure 1:0,3 bis 1:1,95 beträgt.

5. Verfahren nach Anspruch 3, wobei R C₃₋₄-Alkyl ist.

6. Verfahren nach Anspruch 5, wobei n 2,5 bis 4 beträgt.

7. Verfahren nach Anspruch 6, wobei die anfängliche Mischung 1 bis 12 Stunden lang bei 55 bis 80 °C gehalten wird.

8. Verfahren nach Anspruch 7, wobei das Glycollösungsmittel in einer Menge von 84 bis 93 Gew.-% zugegeben wird, das Kupfer(II)salz in einer Menge von 0,1 bis 0,5 Gew.-% zugegeben wird, 4,5-Dichlor-2-n-octyl-4-isothiazolin-3-on in einer Menge von 6 bis 15 Gew.-% zugegeben wird und Dodecylbenzolsulfonsäure in einer Menge von 0,3 bis 1,6 Gew.-% zugegeben wird.

9. Verfahren nach Anspruch 8, wobei das Molverhältnis von Kupfer: Dodecylbenzolsulfonsäure 1:0,35 bis 1:1,95 beträgt.

10. Verfahren nach Anspruch 9, wobei die anfängliche Mischung 1,5 bis 10 Stunden lang bei 60 bis 80 °C gehalten wird.

## Revendications

1. Procédé de production d'une composition microbiocide stable; ledit procédé comprenant les étapes de: (a) combinaison d'un solvant glycol de formule R(OCH₂CHR¹)ₙOH, où R est un groupe alkyle en C₁ à C₆ et n présente une valeur moyenne en nombre de 2 à 5 et R¹ est un groupe hydrogéno ou méthyle; de l'acide dodécylbenzènesulfonique en une quantité de 0,3 à 1,8 % en pds sur la base de la composition microbiocide entière; et un sel de cuivre (II) sélectionné dans le groupe constitué de l'hydroxyde de cuivre (II), du carbonate de cuivre (II) et de leurs mélanges pour former un mélange initial; où un rapport en mole du cuivre:acide dodécylbenzènesulfonique est de 1:0,25 à 1:1,95; (b) le maintien du mélange initial à 50 à 80°C jusqu'à ce qu'une quantité d'ions cuivre dans la solution soit stable, où la quantité d'ions cuivre dans la solution est considérée comme étant stable lorsque le changement en pourcentage dans la concentration des ions cuivre en solution sur une période de trente minutes n'est pas supérieur à 1,2 %; et (c) l'addition de 4,5-dichloro-2-n-octyl-4-isothiazolin-3-one pour produire un mélange final,
et l'élimination de l'excès des sels d'hydroxyde ou d'oxyde de cuivre (II) insolubles du mélange final.

2. Procédé selon la revendication 1 dans lequel le solvant glycol est ajouté en une quantité de 82 à 95 % en pds, le sel de cuivre (II) est ajouté en une quantité de 0,08 à 0,5 % en pds et de la 4,5-dichloro-2-n-octyl-4-isothiazolin-3-one est ajoutée en une quantité de 4 à 16 % en pds, tous les pourcentages basés sur la composition microbiocide entière.

3. Procédé selon la revendication 2 dans lequel les sels de cuivre (II) insolubles sont retirés par filtration ou centrifugation à partir du mélange initial ou du mélange final.

4. Procédé selon la revendication 3 dans lequel le rapport en mole du cuivre:acide dodécylbenzènesulfonique est de 1:0,3 à 1:1,95.

5. Procédé selon la revendication 3 dans lequel R est un groupe alkyle en C₃ à C₄.

6. Procédé selon la revendication 5 dans lequel n a la valeur de 2,5 à 4.

7. Procédé selon la revendication 6 dans lequel le mélange initial est maintenu à 55 à 80°C durant 1 à 12 heures.

8. Procédé selon la revendication 7 dans lequel le solvant glycol est ajouté en une quantité de 84 à 93 % en pds, le sel de cuivre (II) est ajouté en une quantité de 0,1 à 0,5 % en pds, la 4,5-dichloro-2-n-octyl-4-isothiazolin-3-one est ajoutée en une quantité de 6 à 15 % en pds et l'acide dodécylbenzènesulfonique est ajouté en une quantité de 0,3 à 1,6 % en pds.

9. Procédé selon la revendication 8 dans lequel le rapport en mole du cuivre:acide dodécylbenzènesulfonique est de 1:0,35 à 1:1,95.

10. Procédé selon la revendication 9 dans lequel le mélange initial est maintenu à 60 à 80°C durant 1,5 à 10 heures.
